# EUROPÄISCHE PATENTANMELDUNG

(11) **EP 1 643 606 A1**
(43) Veröffentlichungstag der Anmeldung: **05.04.2006**
(21) Anmeldenummer: 04023236.5
(22) Anmeldetag: 29.09.2004
(51) Int. Cl.: H02G 9/10

(54) **Kabelschacht**

(71) Anmelder: Beiner, Günter, 32657 Lemgo (DE); van Eijndhoven, Alex, 5126 PP Gilze (NL)
(72) Erfinder: Beiner, Günter, 32657 Lemgo (DE); van Eijndhoven, Alex, 5126 PP Gilze (NL)
(74) Vertreter: Körner, Ekkehard

(57) **Zusammenfassung**

Ein Kabelschacht aus Kunststoff für die Installation im Erdreich und für die Ein- und Durchleitung von im Erdreich verlegten elektrischen Kabeln besteht aus miteinander zusammengesteckten Seitenwandmodulen (1), die jeweils an ihrem einen, vertikal zu installierenden Rand eine sich längs des Randes erstreckende, zapfenförmige Verbindungseinrichtung (6) und an ihrem gegenüberliegenden Rand eine dazu komplementäre, hülsenförmige Verbindungseinrichtung (7) für die Verbindung zweier aneinander angrenzender Seitenwandmodule (1) aufweisen und an ihrem oberen Rand davon vorstehende Verankerungselemente (5) sowie an ihrem unteren Rand dazu komplementäre Durchbrüche (8) für den Durchtritt der Verankerungselemente (5), die an einem benachbarten Seitenwandmodul (1) oder an einer Bodenplatte (3) ausgebildet sind, aufweisen.

## Beschreibung

Kabelschächte werden im Erdreich installiert, um Verzweigungs-, Verbindungs- und Anschlußpunkte im Erdreich verlegter Rohre und Kabel leicht zugänglich zu machen. Die Dimensionen solcher Kabelschächte hängen von den örtlichen Gegebenheiten ab, wie beispielsweise der Anzahl der in dem Kabelschacht zusammenlaufenden Kabel und der Tiefe, in der diese im Erdreich verlegt sind. Die Erstellung eines Kabelschachtes durch Mauerung oder Betonierung ist aufwendig und erfordert gegebenenfalls eine Schalung, deren Abmessungen von denjenigen des zu erstellenden Kabelschachtes bestimmt sind.

Der Erfindung liegt daher die Aufgabe zugrunde, einen Kabelschacht anzugeben, der schnell und einfach in unterschiedlichen Größen erstellt werden kann.

Diese Aufgabe wird durch die im Anspruch 1 angegebenen Merkmale gelöst. Vorteilhafte Ausgestaltungen der Erfindung sind Gegenstand der Unteransprüche.

Die Erfindung gibt einen Kabelschacht an, der aus modularen Teilen besteht, die zu mehreren miteinander verbunden werden können, so daß leicht mit Hilfe vorgefertigter Teile baukastenartig Kabelschächte unterschiedlicher Grundrißgröße und unterschiedlicher Höhe erstellt werden können. Für die unterschiedlichen Grundrißgrößen sind lediglich eine entsprechende Anzahl von Bodenplatten bereitzuhalten, so daß die Lagerhaltung der zur Erstellung von Kabelschächten unterschiedlicher Abmessungen erforderlichen Bauelemente sehr rationalisiert werden kann.

Die wesentlichsten Elemente des erfindungsgemäßen Kabelschachtes sind Seitenwandmodule, die an ihren Rändern, die im installierten Zustand vertikal verlaufen, zusammensteckbare Verbindungseinrichtungen aufweisen, die in Form von Zapfen und Hülsen ausgebildet sind und es erlauben, zwei aneinandergrenzende Seitenwandmodule auf einfache Weise miteinander zu verbinden, wobei die Konstruktion vorzugsweise so getroffen ist, daß die Vereinigung zweier Seitenwandmodule sowohl im gestreckten Zustand zur Vergrößerung einer einzelnen Seitenwandfläche als auch in abgewinkeitem Zustand zur Verbindung von Längs-. und Querwänden möglich ist. Weitere wesentliche Elemente sind Kopfelemente, die als obere Abschlußelemente auf die Seitenwandmodule aufgesetzt werden können und die Einschraubgewinde aufweisen, in die Einstellschrauben eingeschraubt sind, die unterschiedlich tief eingeschraubt werden können, um mit ihren Köpfen eine Ebene mit vorbestimmter Neigung zu beschreiben, in der ein Deckel des Kabelschachtes von ihnen abgestützt werden soll.

Der Kabelschacht hat vorzugsweise auch eine Bodenplatte, die ebenfalls mittels Steckverbindungen mit den Seitenwandmodulen verbunden ist. Die Bodenplatte weist vorzugsweise wenigstens einen Durchbruch auf, um den Kabelschacht entwässern zu können. Der Durchbruch ist vorzugsweise von einem Stück Geotextilmaterial überspannt, das das Eindringen von Erdreich in den Kabelschacht verhindert.

Vorzugsweise stehen die zapfenförmigen Verbindungselemente, die an den Seitenwandmodulen ausgebildet sind, gegenüber den oben verlaufenden Querrändern der Seitenwandmodule nach oben vor, während an den entgegengesetzten Enden diese Zapfenelemente entsprechend zurückgesetzt sind. Diese Konstruktion erleichtert das Zusammensetzen übereinander anzuordnender Seitenwandmodule und das Aufsetzen der Kopfelemente auf diese. Auch die Bodenplatte kann mit solchen zapfenförmigen Vorsprüngen versehen sein, die die Montage der untersten Seitenwandmodule auf der Bodenplatte erleichtern.

Um zwei miteinander verbundene Seitenwandmodule in ihrer Lage zu stabilisieren, sind die hülsenförmigen und zapfenförmigen Verbindungselemente jeweils mit wenigstens einer Querbohrung versehen, die zur Aufnahme eines Sperrdübels bestimmt sind. Dabei kann eines der beiden Verbindungselemente jeweils mit zwei senkrecht zueinander verlaufenden Bohrungen versehen sein, um die Lagefixierung sowohl im erwähnten gestreckten Zustand als auch im abgewinkelten Zustand zweier miteinander verbundener Seitenwandmodule zu ermöglichen.

Die Erfindung wird nachfolgend unter Bezugnahme auf ein in den Zeichnungen dargestelltes Ausführungsbeispiel und dessen Einzelteile näher erläutert. Es zeigt:
Fig. 1 eine perspektivische Darstellung eines vollständigen Kabelschachts nach der Erfindung;
Fig. 2 eine Einzelheit aus Fig. 1, wobei eines der Kopfelemente entfernt ist;
Fig. 3 eine Einzelheit der Anordnung von Fig. 1 zur Erläuterung der Steckverbindung;
Fig. 4 eine perspektivische Darstellung eines einzelnen Seitenwandmoduls;
Fig. 5 eine Einzelheit der Anordnung von Fig. 1 in einer Schnittebene, die durch einen Dübel verläuft, im abgewinkelten Zustand zweier Seitenwandmodule;
Fig. 6 eine der Fig. 5 vergleichbare Darstellung mit zwei Seitenwandmodulen im "gestreckten" Zustand;
Fig. 7 eine Einzelheit zur Erläuterung der Verbindung zweier übereinander angeordneter Elemente im gelösten Zustand einer im Wesentlichen U-förmigen Klammer;
Fig. 8 eine der Fig. 7 mit in Sicherungsposition befindlicher U-Klammer;
Fig. 9 eine Einzelheit aus Fig. 1 zur Erläuterung der Höhenausgleichsfunktion von Schrauben;
Fig. 10 einen Ausschnitt aus dem Boden mit einem Durchbruch und einer Abdeckplatte dafür;
Fig. 11 die Abdeckplatte von Fig. 10 von ihrer Unterseite, und
Fig. 12 eine perspektivische Darstellung einer Bodenplatte des Kabelschachtes von Fig. 1.

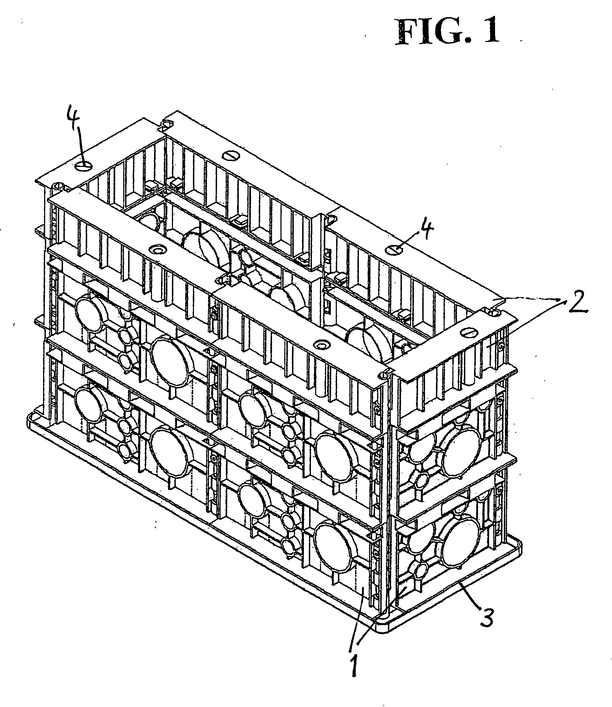

Der Kabelschacht von Fig. 1 hat eine im wesentlichen quaderförmige Gestalt. Er ist im dargestellten Beispiel von zwölf Seitenwandmodulen 1 zweier unterschiedlicher Größen und von sechs Kopfelementen 2 ebenfalls zweier unterschiedlicher Größen und einer Bodenplatte 3 gebildet. Im dargestellten Beispiel sind in den längslaufenden Seitenwänden jeweils zwei Seitenwandmodule gestreckt mit einander verbunden und vier solcher Module in zwei Etagen übereinander angeordnet. An die oberste Etage der Seitenwandmodule schließen sich die Kopfeiemente an. Die queriaufenden Seitenwände bestehen aus zwei übereinander angeordneten Seitenwandmodulen 1 geringerer Länge und einem entsprechenden Kopfelement 2 ebenfalls geringerer Länge. Man erkennt in Fig. 1 ferner in die Kopfelemente 2 eingeschraubte Einstellschrauben 4, deren Funktion später noch erläutert wird.

Sämtliche genannten Teile sind vorzugsweise Kunststoffspritzteile beispielsweise aus Polymeren, wie PP, PE, PA und PC, und angesichts des Einsatzzweckes vorzugsweise aus Recycling-Material.

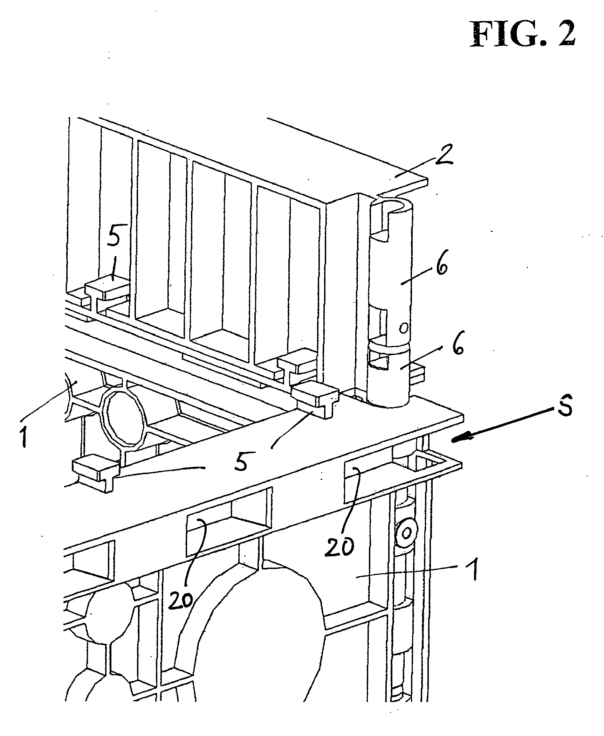

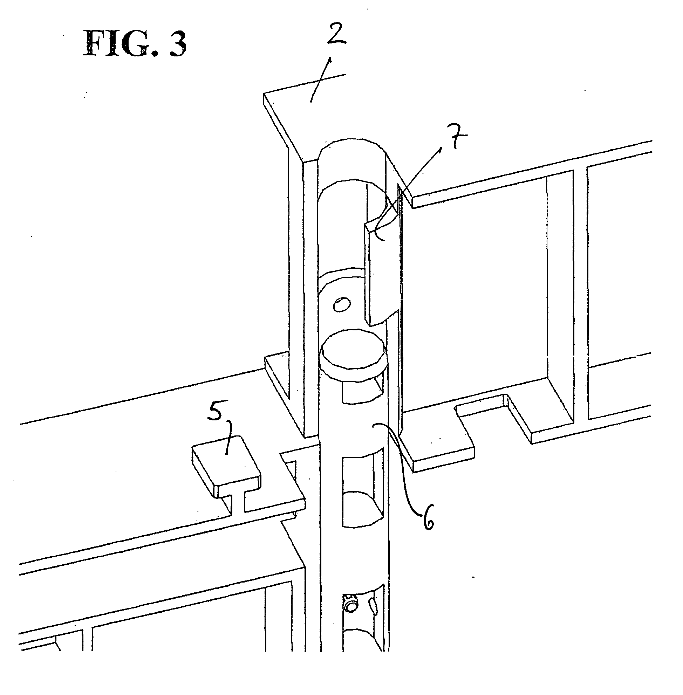

Wie die Einzelheit von Fig. 2 zeigt, sind an den oberen Querrändern der Seitenwandmodule, die einen sich quer zur Wanderstreckung verlaufenden Flansch aufweisen, nach oben vorstehende Verankerungselemente 5 T-förmigen Querschnitts ausgebildet. Diese dienen dazu, zwei übereinander angeordnete Seitenwandmodule 1 beziehungsweise ein Seitenwandmodul 1 und ein darüber angeordnetes Kopfelement 2 aneinander zu sichern. Wie dieses genau erfolgt, wird später noch erläutert. Weiterhin erkennt man in Fig. 2, daß am einen vertikalen Rand eines Seitenwandelements, nämlich jenes, das in Fig. 2 weiter hinten zu sehen ist, ein zapfenförmiges Verbindungselement 6 ausgebildet ist, das nach oben vorsteht. Wie in diesem Zusammenhang aus Fig. 3 ersichtlich ist, dient das zapfenförmige Verbindungselement 6 dazu, von einem hülsenförmigen Verbindungselement 7 aufgenommen zu werden, das zu einem darüber befindlichen Seitenwandmodul oder Kopfelement gehört, in Fig. 3 ist dieses ein Kopfelement 2. Das andere Ende dieses Kopfelements 2, das in Fig. 2 zu sehen ist, hat ebenfalls ein zapfenförmiges Verbindungselement 6, das jedoch an seinem unteren Ende entsprechend verkürzt ist, um Platz für den vorstehenden Abschnitt des zapfenförmigen Verbindungselements 6 des Seitenwandmoduls der tieferen Etage zu schaffen.

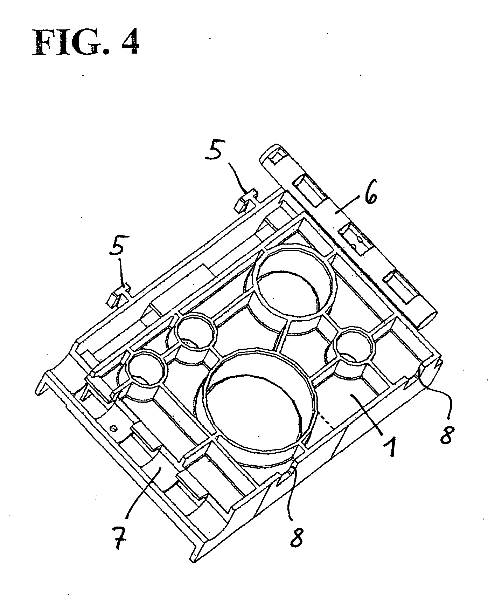

Die vollständige Konstruktion eines Seitenwandmoduls ist in Fig. 4 dargestellt. Man erkennt dort an zwei gegenüberliegenden Rändern ein zapfenförmiges, einseitig vorstehendes Verbindungselement 6, das an seinem anderen Ende entsprechend zurückgesetzt ist, am gegenüberliegenden Rand eine hülsenförmige Aufnahme 7 für das zapfenförmige Verbindungselement 6 eines benachbarten Seitenwandmoduls. An einem der beiden anderen Ränder, und zwar jenem, der im montierten Zustand oben liegt, sind zwei vorstehende Verankerungselemente 5 und, damit fluchtend, am anderen Rand, der einen quer zur Wanderstreckung verlaufenden Flansch aufweist, zwei dazu passende Durchbrüche 8 ausgebildet, die zur Aufnahme der Verankerungselemente 5 bestimmt sind, die von einem Seitenwandmodul einer niedrigeren Etage oder einer Bodenplatte vorstehen. Man erkennt ferner, daß das Seitenwandmodul 1 durch eine Reihe von Stegen ausgesteift ist, von denen einige ringförmig gestaltet sind und Bereiche definieren, in denen das Seitenwandmodul 1 zur Durchführung von Rohren und/oder Kabeln durchbrochen werden kann.

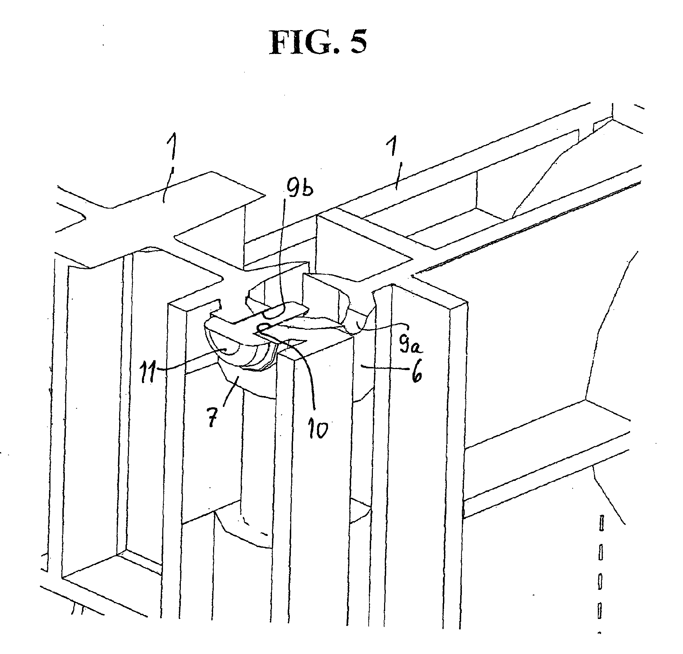

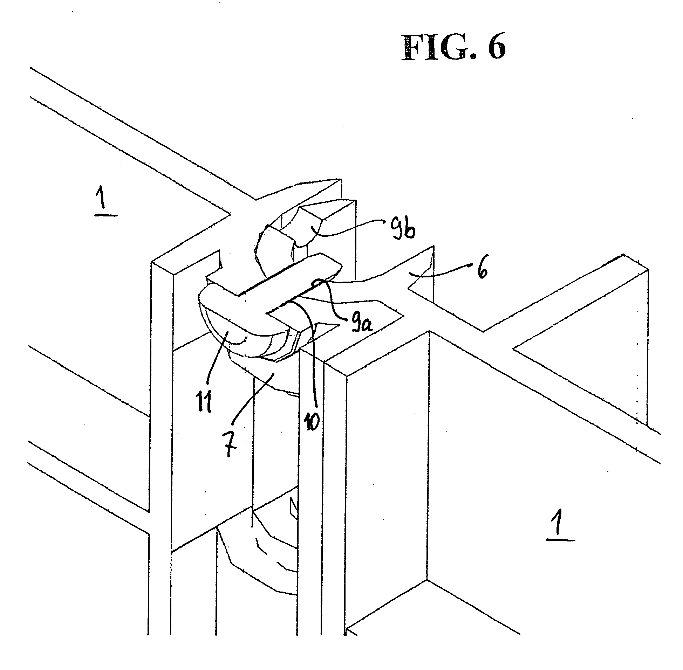

Die Fig. 5 und 6 zeigen in anschaulicher Weise eine winkelförmige und eine gestreckte Verbindung zweier einander benachbarter Seitenwandmodule 1. Wie dort, aber auch in Fig. 1 zu erkennen ist, sind die Seitenwandmodule 1 so gestaltet, daß sie sowohl im Winkel (Fig. 5) als auch gestreckt (Fig. 6) miteinander verbindbar sind, denn die hülsenförmigen Verbindungselemente 7 und die übrige Profilierung der Seitenwandelemente 1 sowie die zapfenförmigen Verbindungselemente 6 erlauben es, die Seitenwandmodule 1 gegeneinander in begrenztem Umfang zu verschwenken.

Um zwei miteinander verbundene Seitenwandmodule 1 in ihrer gegenseitigen Winkellage zu fixieren, sind in den Verbindungselementen 6 und 7 Bohrungen 9 und 10 vorgesehen, die miteinander in Deckung gebracht werden können und in die ein gemeinsamer Sperrdübel 11 eingesteckt ist. Vorzugsweise weist das zapfenförmige Verbindungselement 6 in vorzugsweise gleicher Höhenlage zwei um 90° gegeneinander versetzte Bohrungen 9a und 9b auf, die es somit erlauben, die beiden aneinandergrenzenden Seitenwandmodule 1 wahlweise im Winkel (Fig. 5) oder gestreckt (Fig. 6) aneinander festzulegen.

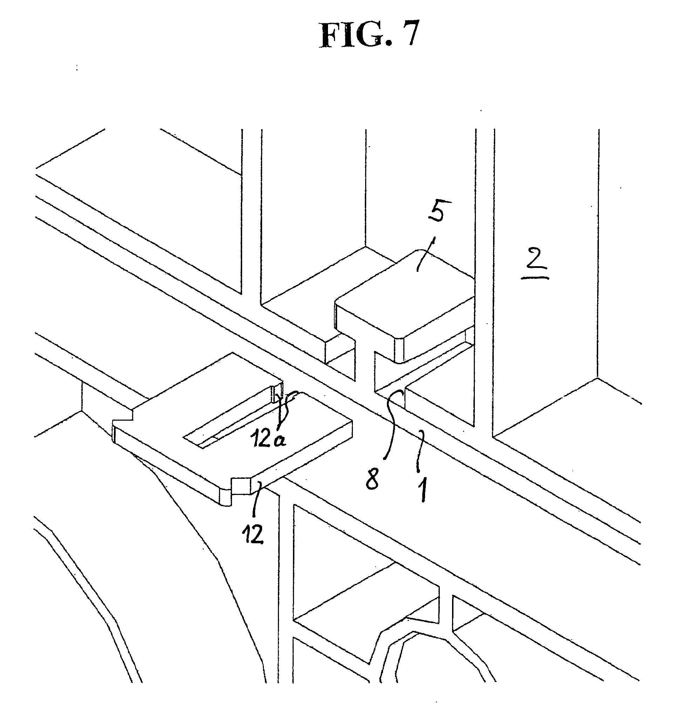

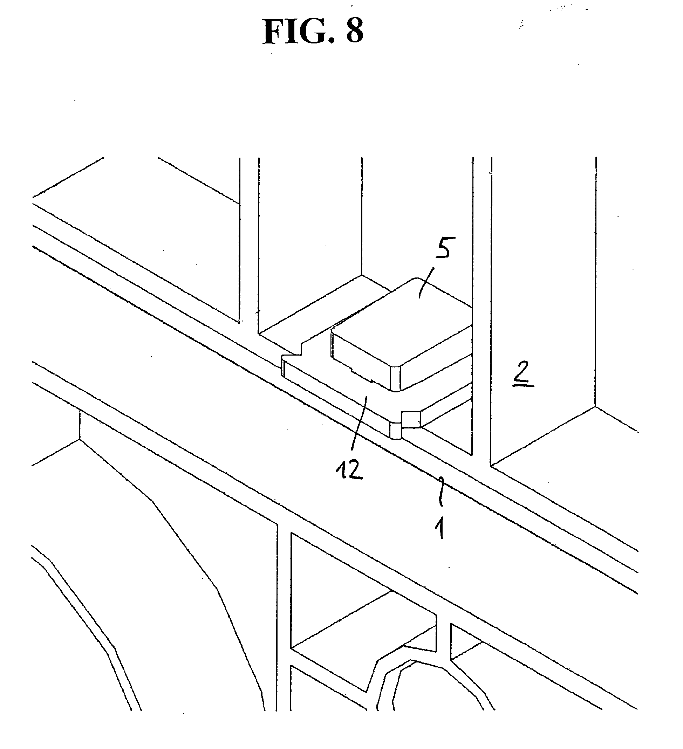

Es soll nun die gegenseitige Verriegelung zweier vertikal übereinander angeordneter Bauelemente des Kabelschachtes anhand der Fig. 7 und 8 erläutert werden. Wie bereits erwähnt, sind die Seitenwandmodule 1 an ihrem oberen Rand mit vorstehenden, im Querschnitt T-förmigen Verankerungselementen 5 versehen. Die unteren Ränder der Seitenwandmodule und der Kopfelemente weisen in ihren querlaufenden Flanschen mit den Verankerungselementen 5 fluchtende Durchbrüche 8 auf, siehe hierzu auch Fig. 4. Die Unterseite des Querschenkels eines T-förmigen Verankerungselements 5 hat zur Oberseite des Flansches, in dem der Durchbruch 8 ausgebildet ist, einen vorbestimmten Abstand, der so dimensioniert ist, daß eine im wesentlichen U-förmige Sicherungsklammer 12 zwischen den genannten Querschenkel und den erwähnten Flansch eingeschoben werden kann, die seinen den Querschenkel tragenden Steg umgreift und an diesem vorzugsweise klemmend gesichert ist. Fig. 7 zeigt den Zustand vor dem Einschieben der U-Klammer 12, während Fig. 8 den fertig montierten Zustand zeigt. Die freien Enden der Schenkel der U-Klammer 12 haben auf den einander zugewandten Seiten vorzugsweise vorstehende Nasen 12a, die hinter den Rand des aufstehenden Schenkels des ihn sichernden Verankerungseiements 5 rasten, um ein Abrutschen der U-Klammer 12 zu verhindern.

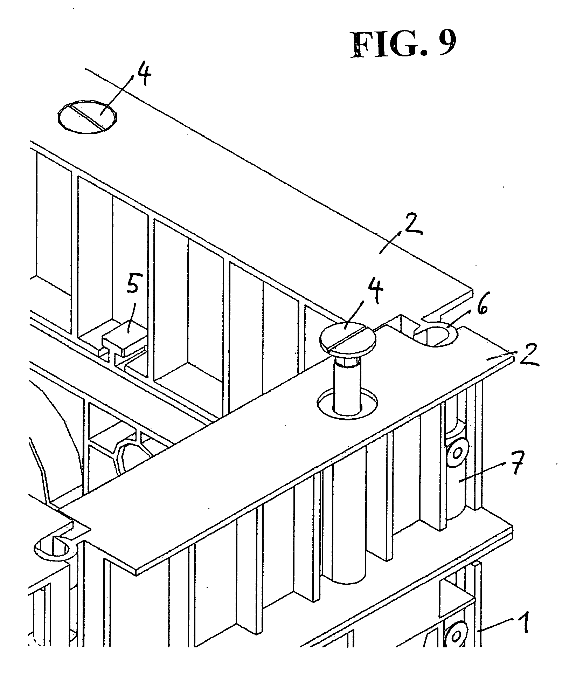

Fig. 9 zeigt eine Einzelheit aus Fig. 1, und zwar insbesondere Einstellschrauben 4, die von oben in die Kopfelemente 2 eingeschraubt sind und die unterschiedlich hoch eingestellt werden können, um eine Deckelplatte (nicht dargestellt) in einer vorbestimmten Winkellage abstützen zu können. Man kann auf diese Weise unterschiedlichen Neigungen der Oberfläche einer Straße, in der der Kabelschacht installiert ist, Rechnung tragen.

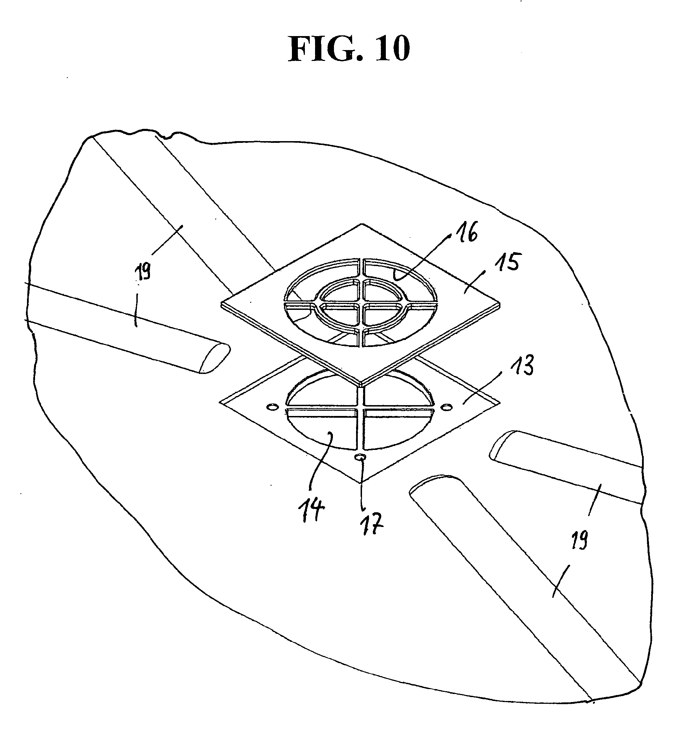

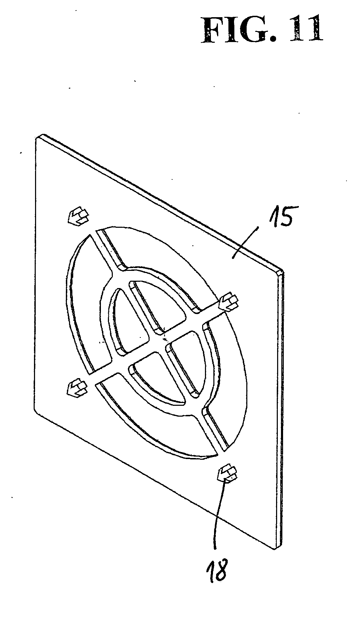

Fig. 10 zeigt eine Einzelheit der Bodenplatte 3. Man erkennt in ihr eine Vertiefung 13, in der ein Durchbruch 14 ausgebildet ist. In die Vertiefung ist eine in Fig. 10 abgehoben dargestellte Abdeckplatte 15 einsetzbar, die ebenfalls mit einem Durchbruch 16 versehen ist. Die Vertiefung hat weiterhin vier Löcher 17, während die Abdeckplatte 15 an ihrer Unterseite gemäß Fig. 11 mit vier Vorsprüngen 18 versehen ist, die zu ihren freien Enden hin vorzugsweise spitz zulaufen. Mit Hilfe der Abdeckplatte 15 ist in der Vertiefung 13 ein Materialstück aus einem Geotextil, beispielsweise einem Vliesstoff, festklemmbar, das von den Vorsprüngen 18 durchstoßen wird. Die in Fig. 10 außerdem erkennbaren Rippen 19 versteifen die Bodenplatte.

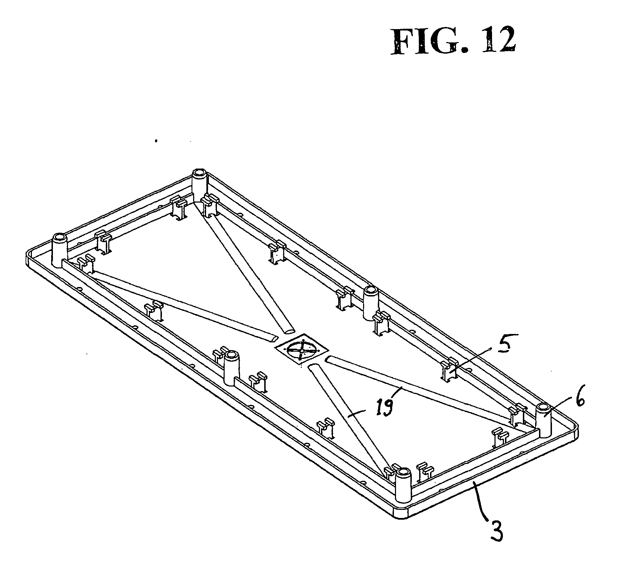

Ein vollständiges Bild der Bodenplatte 3 ist in Fig. 12 dargestellt. Man erkennt eine rechteckige Bodenplatte 3, die zur Verwendung mit zwei gestreckt hintereinander angeordneten Seitenwandmodulen der Längsseite und einem demgegenüber kürzeren Seitenwandmodul der Querseite bestimmt ist. Die Bodenplatte 3 hat daher eine der Anzahl der verwendeten Seitenwandmodule entsprechende Anzahl von zapfenförmigen Vorsprüngen 6, die Verbindungselemente bilden, an denen die Seitenwandmodule 1 (in Fig. 12 nicht dargestellt) zentriert werden können. Außerdem weist die Bodenplatte 3 mehrere vorstehende Verankerungselemente 5 auf, die an solchen Stellen angeordnet sind, wo sie in entsprechende Durchbrüche 8 an den Rändern der Seitenwandmodule eintreten können. Die Seitenwandmodule können dann an der Bodenplatte 3 mit Hilfe von U-förmigen Klammern 12 ganz nach der Art und Weise, die in den Figuren 7 und 8 dargestellt sind, an der Bodenplatte 3 gesichert werden.

Es versteht sich, daß mit Hilfe unterschiedlich großer und in ihrer Zahl anders gewählter Seitenwandmodule Kabelschächte entsprechend abweichender Abmessungen aufgebaut werden können, wozu gegebenenfalls lediglich die Bodenplatte entsprechend gewählt werden muß. Auch können eine andere Zahl von Seitenwandmodulen übereinander angeordnet sein. Wenn es erforderlich sein sollte, tiefe Kabelschächte zu erstellen, können mehr als zwei Seitenwandmodule übereinander angeordnet werden, ohne daß an der übrigen Konstruktion des Kabelschachtes irgend etwas geändert werden muß.

Um die Möglichkeit zu schaffen, die Seitenwandmodule 1 und 2 zusätzlich in ihrer Längserstreckung durch Hohlprofilstäbe aus Stahl, insbesondere Vierkantprofile verstärken zu können, weisen sie in ihren längslaufenden Randbereichen in Längsrichtung verteilte Taschen 20 auf, die abwechselnd zur einen und zur anderen Seite offen sind, um die Seitenwandmodule mit einfachen, schieberlosen Spritzformen herstellen zu können, die in Kombination aber einen Kanal bilden, in dem ein Vierkantprofilstab sicher gehalten wird, der in Längsrichtung in diesen Kanal einschiebbar ist, wie in Fig. 1 durch den Pfeil S versinnbildlicht ist. Diese Kanäle brauchen nur an den jeweils oberen Rändern der Seitenwandmodule und ggf. der Kopfmodule ausgebildet zu sein.

## Patentansprüche

1. Kabelschacht aus Kunststoff für die Installation im Erdreich und für die Ein- und Durchleitung von im Erdreich verlegten elektrischen Kabeln, bestehend aus miteinander zusammengesteckten Seitenwandmodulen (1), die jeweils an ihrem einen, vertikal zu installierenden Rand eine sich längs des Randes erstreckende, zapfenförmige Verbindungseinrichtung (6) und an ihrem gegenüberliegenden Rand eine dazu komplementäre, hülsenförmige Verbindungseinrichtung (7) für die Verbindung zweier aneinander angrenzender Seitenwandmodule (1) aufweisen und an ihrem oberen Rand davon vorstehende Verankerungselemente (5) sowie an ihrem unteren Rand dazu komplementäre Durchbrüche (8) für den Durchtritt der Verankerungselemente (5), die an einem benachbarten Seitenwandmodul (1) oder an einer Bodenplatte (3) ausgebildet sind, aufweisen.

2. Kabelschacht nach Anspruch 1, **dadurch gekennzeichnet, daß** die hülsenförmige Verbindungseinrichtung (7) und die zapfenförmige Verbindungseinrichtung (6) jeweils wenigstens eine Querbohrung (9, 10) aufweisen, die in einer vorbestimmten Stellung zweier benachbarter Seitenwandmodule (1) miteinander fluchten und in die ein Sperrdübel (11) eingesteckt ist.

3. Kabelschacht nach Anspruch 2, **dadurch gekennzeichnet, daß** die zapfenförmige Verbindungseinrichtung (6) wenigstens zwei Bohrungen (9a, 9b) aufweist, die um 90° gegeneinander versetzt sind.

4. Kabelschacht nach einem der vorhergehenden Ansprüche, **dadurch gekennzeichnet, daß** die vorstehenden Verankerungselemente (5) jeweils einen T-förmigen Querschnitt haben und zwei übereinander angeordnete wandbildende Elemente (1, 2) durch eine unter dem Querschenkel des Verankerungselements (5) liegende, den Steg des Verankerungselements (5) umgreifende U-förmige Klammer (12) aneinander gesichert sind.

5. Kabelschacht nach Anspruch 4, **dadurch gekennzeichnet, daß** die U-förmige Klammer (12) an den Enden ihrer Schenkel auf deren einander zugewandten Seiten jeweils eine vorstehende Nase (12a) aufweist und die Nasen (12a) rastend hinter den Rand des aufrechten Steg des von der Klammer (12) gesicherten Verankerungselements (5) greifen.

6. Kabelschacht nach einem der vorgehenden Ansprüche, **dadurch gekennzeichnet, daß** auf die oberen Seitenwandmodule (1) jeweils Kopfmodule (2) aufgesetzt sind, die an ihren vertikalen Rändern den Verbindungseinrichtungen (6, 7) der Seitenwandmodule (1) entsprechende Verbindungseinrichtungen (6, 7) und an ihrem unteren Rand zu den von den Seitenwandmodulen (1) vorstehenden Verankerungselementen (5) passende Durchbrüche (8) aufweisen und an ihrem oberen Rand Gewindebohrungen haben, in die Einstellschrauben (14) zur Abstützung eines Schachtdeckels eingeschraubt sind.

7. Kabelschacht nach einem der vorgehenden Ansprüche, **dadurch gekennzeichnet, daß** die zapfenförmigen Verbindungselemente (6) nach oben gegenüber den querlaufenden Rändern der Seitenwandmodule (1) vorstehen und am entgegengesetzten Ende gegenüber dem anderen querlaufenden Rand entsprechend zurückgesetzt sind.

8. Kabelschacht nach Anspruch 7, **dadurch gekennzeichnet, daß** er eine Bodenplatte (3) aufweist, die oben vorstehende Zapfenelemente (6) aufweist, die von den hülsenförmigen Verbindungseinrichtungen (7) der mit der Bodenplatte (3) verbundenen Seitenwandmodule (1) aufgenommen sind, und daß die Bodenplatte (3) nach oben vorstehende Verankerungselemente (5) aufweist, die von komplementären Durchbrüchen (8) der mit der Bodenplatte (3) verbundenen Seitenwandmodule (1) aufgenommen und an diesen gesichert sind.

9. Kabelschacht nach Anspruch 8, **dadurch gekennzeichnet, daß** die Bodenplatte (3) wenigstens einen Durchbruch (14) für eine Entwässerung des Kabelkanals aufweist.

10. Kabelschacht nach Anspruch 9, **dadurch gekennzeichnet, daß** der Durchbruch (14) von einem Abschnitt Geotextilmaterial überspannt ist.

11. Kabelschacht nach Anspruch 10, **dadurch gekennzeichnet, daß** der Geotextümaterialabschnitt über dem Durchbruch (14) durch Klemmeinrichtungen (17,18) gesichert ist.

12. Kabelschacht nach einem der vorhergehenden Ansprüche, **dadurch gekennzeichnet, daß** wenigstens in den Seitenwandmodulen (1,2) wenigstens jeweils im oberen Randbereich ein von Taschen (20) gebildeter Einsteckkanal für die Aufnahme jeweils eines Aussteifungsstabes ausgebildet ist.
